# EUROPEAN PATENT APPLICATION

(11) **EP 4 451 179 A1**
(43) Date of publication of application: **23.10.2024**
(21) Application number: 24164209.9
(22) Date of filing: 18.03.2024
(51) Int. Cl.: G06N 3/098, G06N 3/045

(54) **NODE, INFORMATION PROCESSING SYSTEM, INFORMATION PROCESSING METHOD, AND CARRIER MEDIUM**

(30) Priority: 22.03.2023 JP 2023045229
(71) Applicant: Ricoh Company, Ltd., Tokyo 143-8555 (JP)
(72) Inventor: AIZAKI, Tomoyasu, Tokyo, 143-8555 (JP); KAWAMURA, Shintaro, Tokyo, 143-8555 (JP)
(74) Representative: SSM Sandmair

(57) **Abstract**

A node (3) includes a display control unit (33), a reception unit (32), and a transmission unit (31). The display control unit (33) displays on a display unit (308), local model identification information (1364) identifying a local model generated by another node and a classification item (1362) that classifies learning data used to generate the local model. The reception unit (32) receives selection of the local model. The transmission unit (31) transmits selection information indicating the selection of the local model to another device.

## Description

### BACKGROUND

### Technical Field

Embodiments of the present disclosure relate to a node, an information processing system, an information processing method, and a carrier medium.

### Related Art

The known multimodal training method trains a tree model in cooperation with each partner of multiple partners, based on data from a user sample that is common to each of the multiple partners, performs feature weighting on the trained tree models, and assigns corresponding weights to the feature columns generated by each tree model (see, for example, Japanese Unexamined Patent Application Publication No. 2021 - 121922).

### SUMMARY

An object of the present disclosure is to appropriately select a learning model or share information for appropriately selecting the learning model.

Embodiments of the present disclosure described herein provide a novel node including a display control unit, a reception unit, and a transmission unit. The display control unit displays on a display unit, local model identification information identifying another local model generated by another node and a classification item that classifies learning data used to generate said another local model. The reception unit receives selection of said another local model. The transmission unit transmits selection information indicating the selection of said another local model to another device.

Embodiments of the present disclosure described herein provide a novel information processing method executed by a node. The method includes: displaying on a display unit, local model identification information identifying a local model generated by another node and a classification item that classifies learning data used to generate the local model; receiving selection of the local model; and transmitting selection information indicating the selection of the local model to another device.

Embodiments of the present disclosure provide a carrier medium carrying computer-readable program code that causes a computer system to perform the above-described information processing method.

Embodiments of the present disclosure described herein provide a novel information processing system including a device and a node. The device communicates with the node. The node includes a display control unit, a reception unit, and a transmission unit. The display control unit displays on a display unit, local model identification information identifying another local model generated by another node and a classification item that classifies learning data used to generate said another local model. The reception unit receives selection of said another local model. The transmission unit transmits selection information indicating the selection of said another local model to the other device. The other device receives the selection information transmitted by the node.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating an overall configuration of an information processing system according to an embodiment of the present disclosure;
FIG. 2 is a diagram illustrating a hardware configuration of a terminal device and a server according to an embodiment of the present disclosure;
FIG. 3 is a block diagram illustrating a functional configuration of an information processing system according to an embodiment of the present disclosure;
FIGS. 4A and 4B are conceptual diagrams illustrating a service information management table according to an embodiment of the present disclosure;
FIG. 5 is a sequence diagram illustrating service proposal processing according to an embodiment of the present disclosure;
FIG. 6 is a diagram illustrating a setting screen according to an embodiment of the present disclosure;
FIG. 7 is a diagram illustrating a recommendation screen according to an embodiment of the present disclosure;
FIG. 8 is a diagram illustrating another recommendation screen according to an embodiment of the present disclosure;
FIG. 9 is a sequence diagram illustrating model processing according to an embodiment of the present disclosure;
FIG. 10 is a diagram illustrating a selection screen according to an embodiment of the present disclosure; and
FIGS. 11A and 11B are diagrams of a data classification screen according to an embodiment of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Federated learning is a machine learning technique that performs learning in which data is not aggregated but remains distributed. The federated learning is a technique that enables the implementation of a model that takes advantage of data between multiple clients as if the data were linked while ensuring privacy and security.

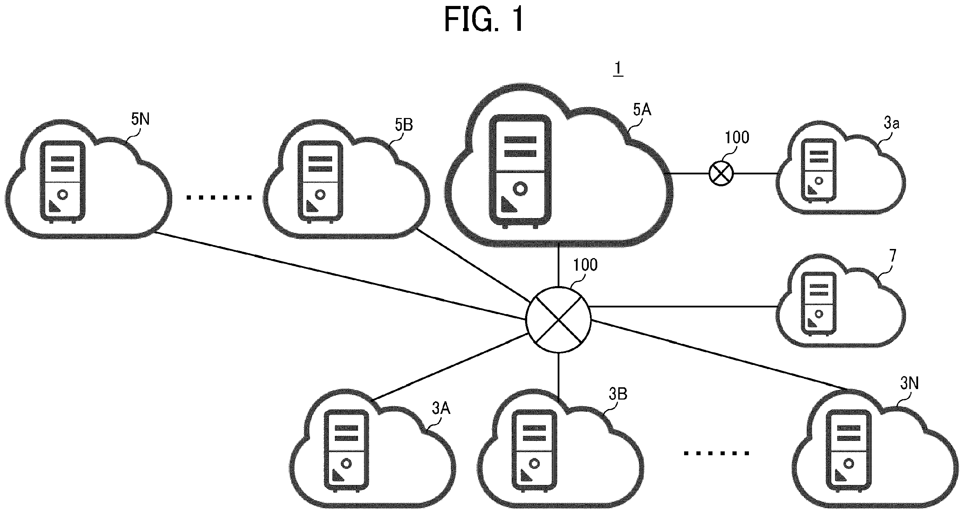

FIG. 1 is a diagram illustrating an overall configuration of an information processing system 1 according to an embodiment of the present disclosure. The information processing system 1 according to the present embodiment includes multiple terminal devices 3A, 3B to 3N, and 3a, multiple servers 5A, 5B to 5N, and a proposal device 7.

Each of the multiple servers 5A, 5B to 5N serves as an information processing apparatus that manages a global model used for the federated learning. Since the global model is a learning model managed on the server 5 side, in other words, on the central side, the global model may be referred to as a central model. The multiple servers 5A, 5B to 5N are referred to simply as the server 5 when it is not necessary to distinguish them from each other.

The multiple terminal devices 3A, 3B to 3N are examples of nodes used by clients participating in the federated learning managed by the server 5A. The terminal device 3a serves as a node used by clients that do not participate in the federated learning but receive a learned global model distributed from the server 5A. The multiple terminal devices 3A, 3B to 3N are referred to simply as the terminal device 3 when they do not need to be distinguished from each other.

The proposal device 7 serves as an information processing apparatus that proposes a learning model such as a global model managed by each of the multiple servers 5A, 5B to 5N to the multiple terminal devices 3A, 3B to 3N. The functions of the proposal device 7 may be implemented by one of the servers such as a particular server 5A. In this case, the particular server 5A functioning as the proposal device 7 proposes a learning model such as a global model managed by each of the multiple servers 5A, 5B to 5N, and provides a learning model such as the global model managed by the server 5A.

The multiple terminal devices 3A, 3B to 3N, 3A, the multiple servers 5A, 5B to 5N, and the proposal device 7 communicate with each other via a communication network 100. The communication network 100 is implemented by, for example, the Internet, a mobile communication network, and a local area network (LAN). The communication network 100 may include, in addition to a wired network, a wireless network in compliance with, for example, 5th generation (5G), worldwide interoperability for microwave access (WiMAX), and long term evolution (LTE).

In the information processing system 1, all or some of the multiple terminal devices 3A, 3B to 3N, and 3a, the specific server 5A, and the proposal device 7 may be configured with cloud computing. In this case, the multiple terminal devices 3A, 3B to 3N, and 3a, the specific server 5A, and the proposal device 7 can communicate with each other at high speed without using the communication network 100.

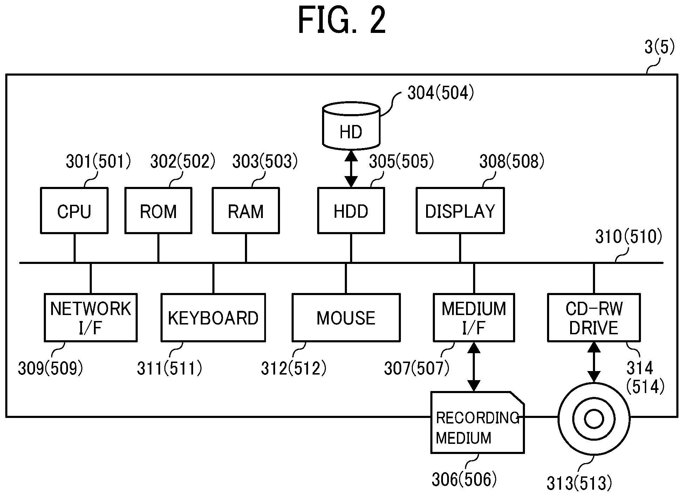

FIG. 2 is a diagram illustrating a hardware configuration of the terminal device 3 and the server 5 according to an embodiment of the present disclosure. Each hardware component of the terminal device 3 is denoted by a reference numeral in 300 series. Each hardware component of the server 5 is denoted by a reference numeral in 500 series in parentheses. The proposal device 7 also includes the same or substantially the same hardware configuration as that of the server 5. Therefore, the reference numerals and the description of the hardware configuration are omitted.

The terminal device 3 includes a central processing unit (CPU) 301, a read-only memory (ROM) 302, a random-access memory (RAM) 303, a hard disk (HD) 304, a hard disk drive (HDD) 305, a medium interface (I/F) 307, a display 308, a network I/F 309, a keyboard 311, a mouse 312, a compact disc-rewritable (CD-RW) drive 314, and a bus line 310.

The CPU 301 controls overall operation of the terminal device 3. The ROM 302 stores programs to boot the CPU 301. The RAM 303 is used as a work area for the CPU 301. The HD 304 stores various data such as programs. The HDD 305 controls reading and writing of data from and to the HD 304 under control of the CPU 301. The medium I/F 307 controls reading or writing (storing) of data from or to a recording medium 306 such as a flash memory. The display 308 displays various types of information such as a cursor, a menu, a window, a character, or an image. The network I/F 309 is an interface that controls communication of data through the communication network 100. The keyboard 311 is an input device provided with multiple keys for a user to input, for example, characters, numerals, or various instructions. The mouse 312 is an input device that allows the user to select or execute a specific instruction, select a target for processing, or move a cursor being displayed. The CD-RW drive 314 controls reading and writing of various kinds of data from and to a CD-RW 313, which is one example of a removable recording medium. The terminal device 3 may further include a configuration for controlling reading or writing (storing) of data from or to an external PC or an external device connected by wire or wirelessly such as wireless fidelity (Wi-Fi).

The server 5 includes a CPU 501, a ROM 502, a RAM 503, a HD 504, a HDD 505, a medium I/F 507, a display 508, a network I/F 509, a keyboard 511, a mouse 512, a CD-RW drive 514, and a bus line 510. Since the hardware configuration of the server 5 is the same or substantially the same as the hardware configuration of the terminal device 3 (the CPU 301, the ROM 302, the RAM 303, the HD 304, the HDD 305, the recording medium 306, the medium I/F 307, the display 308, the network I/F 309, the keyboard 311, the mouse 312, the CD-RW drive 314, and the bus line 310), the description of the hardware configuration of the server 5 is omitted.

A compact disc-recordable (CD-R) drive may be used instead of the CD-RW drive 314 (514). Each of the terminal device 3 and the server 5 may be configured by a single computer or multiple computers to which divided portions (functions, method, or storages) are arbitrarily allocated.

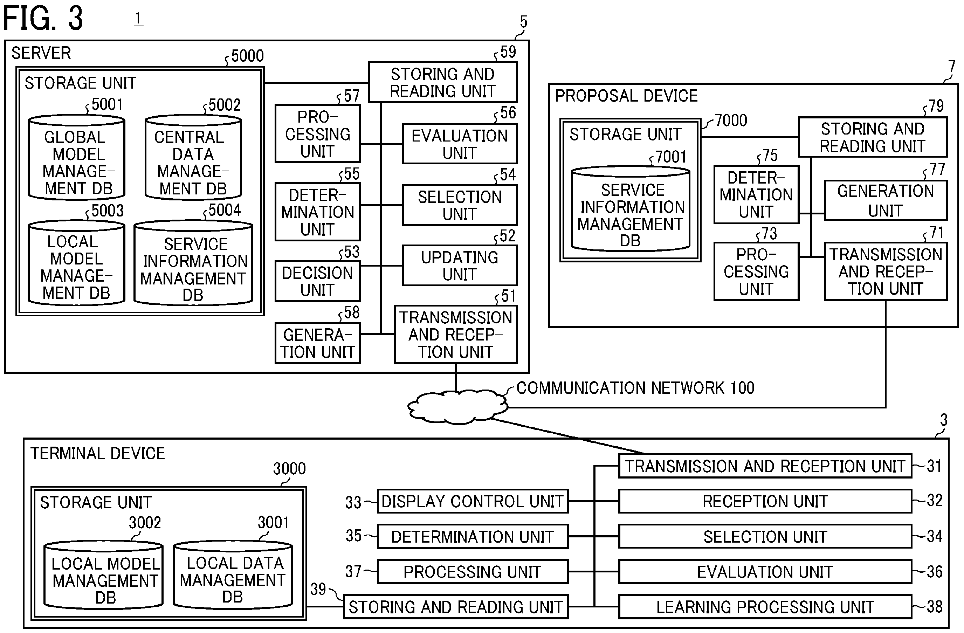

FIG. 3 is a block diagram illustrating a functional configuration of the information processing system 1 according to an embodiment of the present disclosure.

The terminal device 3 includes a transmission and reception unit 31, a reception unit 32, a display control unit 33, a selection unit 34, a determination unit 35, an evaluation unit 36, a processing unit 37, a learning processing unit 38, and a storing and reading unit 39. Each of the units described above is a function or a unit for functioning that is implemented by any of the components illustrated in FIG. 2 operating in response to an instruction from the CPU 301 in accordance with a program deployed from the HD 304 on the RAM 303. The terminal device 3 further includes a storage unit 3000 implemented by the RAM 303 and the HD 304 illustrated in FIG. 2. The storage unit 3000 serves as storage means.

A description is given below of each functional unit of the terminal device 3.

The transmission and reception unit 31 serves as reception means. The transmission and reception unit 31 is implemented by instructions of the CPU 301 and the network I/F 309 illustrated in FIG. 2, and transmits and receives various data (or information) to and from other terminals, apparatuses, and systems through the communication network 100.

The reception unit 32 serves as reception means. The reception unit 32 is implemented by the instructions of the CPU 301, the keyboard 311, and the mouse 312 illustrated in FIG. 2, and accepts various inputs from the user.

The display control unit 33 serves as display control means. The display control unit 33 is implemented by instructions of the CPU 301 illustrated in FIG. 2, and causes the display 308, which serves as a display unit, to display various images and screens.

The selection unit 34 is implemented by the instructions of the CPU 301 illustrated in FIG. 2, and executes a process of selecting information. The selection unit 34 serves as selection means.

The determination unit 35 is implemented by the instructions of the CPU 301 illustrated in FIG. 2, and executes various determination processing. The determination unit 35 serves as determination means.

The evaluation unit 36 is implemented by the instructions of the CPU 301 illustrated in FIG. 2, and executes a process for evaluating a global model to be described later. The evaluation unit 36 serves as evaluation means.

The processing unit 37 is implemented by the instructions of the CPU 301 illustrated in FIG. 2, and executes a process such as calculating the number of data and classifying the data. The processing unit 37 serves as processing means.

The learning processing unit 38 is implemented by the instructions of the CPU 301 illustrated in FIG. 2, and executes learning processing. The learning processing unit 38 serves as learning processing means.

The storing and reading unit 39 serves as a storage control unit. The storing and reading unit 39 is implemented by the instructions of the CPU 301, the HDD 305, the medium I/F 307, the CD-RW drive 314, and external PCs or external devices illustrated in FIG. 2. The storing and reading unit 39 writes and reads various types of data to and from the storage unit 3000, the recording medium 306, the CD-RW 313, and the external PCs and or external devices.

The storage unit 3000 stores a local data management database (DB) 3001 and a local model management DB 3002.

The local data management DB 3001 stores local data input when the learning processing unit 38 executes the learning processing for each task executed by a model. The local model management DB 3002 stores a local model for each task to be executed. The local model is obtained by the learning processing unit 38 executing the learning processing. In this embodiment, the tasks executed by the model include an image recognition task, a business analysis task, and a natural language processing task.

The server 5 includes a transmission and reception unit 51, an updating unit 52, a decision unit 53, a selection unit 54, a determination unit 55, an evaluation unit 56, a processing unit 57, and a storing and reading unit 59. These units are functions or units functioning that are implemented by or caused to function by operating one or more hardware components illustrated in FIG. 2 in cooperation with instructions of the CPU 501 according to the program loaded from the HD 504 to the RAM 503. The server 5 further includes a storage unit 5000 implemented by the HD 504 illustrated in FIG. 2. The storage unit 5000 serves as storage means.

A description is given below of each functional unit of the server 5. The server 5 may be implemented by the functions distributed to multiple computers. In the following, a description is given below of an example in which the server 5 is a server computer that resides in a cloud environment. In another example, the server 5 may be a server that resides in an on-premises environment.

The transmission and reception unit 51 serves as a transmission unit. The transmission and reception unit 51 is implemented by the instructions of the CPU 501 and the network I/F 509 illustrated in FIG. 2, and transmits and receives various data (or information) to and from other terminals, apparatuses, and systems through the communication network 100.

The updating unit 52 is implemented by the instructions of the CPU 501 illustrated in FIG. 2, and executes the process for evaluating the global model to be described later. The updating unit 52 serves as updating means.

The decision unit 53 is implemented by the instructions of the CPU 501 illustrated in FIG. 2, and executes a process for deciding an incentive to be described later. The decision unit 53 serves as decision means.

The selection unit 54 is implemented by the instructions of the CPU 501 illustrated in FIG. 2, and executes a process for selecting the terminal device 3 that participates in a model, data, and federated learning. The selection unit 54 serves as selection means.

The determination unit 55 is implemented by the instructions of the CPU 501 illustrated in FIG. 2, and performs various determinations.

The evaluation unit 56 is implemented by the instructions of the CPU 501 illustrated in FIG. 2, and executes the process for evaluating the global model. The evaluation unit 56 serves as evaluation means.

The processing unit 57 is implemented by the instructions of the CPU 501 illustrated in FIG. 2 and executes a process for aggregating data. The processing unit 57 serves as processing means.

The generation unit 58 is implemented by the instructions of the CPU 501 illustrated in FIG. 2, and executes a process for generating various types of image data for displaying on a display.

The storing and reading unit 59 serves as a storage control unit. The storing and reading unit 59 is implemented by the instructions of the CPU 501, the HDD 505, the medium I/F 507, the CD-RW drive 514, and external PCs or external devices illustrated in FIG. 2. The storing and reading unit 59 writes and reads various types of data to and from the storage unit 5000, the recording medium 506, the CD-RW 513, and the external PCs or the external devices. The storage unit 5000, the recording medium 506, the CD-RW 513, and the external PCs or the external devices are examples of a storage unit.

The storage unit 5000 includes a global model management DB 5001, a central data management DB 5002, a local model management DB 5003, and a service information management DB 5004.

The global model management DB 5001 stores the global model distributed to the terminal device 3 for each task to be executed. The central data management DB 5002 stores central data for each task to be executed by the model. The central data includes evaluation data for evaluating the global model.

The local model management DB 5003 stores multiple local models for each task to be executed. Each of the local models is generated by a corresponding one of the terminal devices 3A, 3B to 3N. The service information management DB 5004 stores model attribute information and service attribute information. The model attribute information indicates the attribute of the model managed by the server 5. The service attribute information indicates the attribute of the server 5 related to a service of the model.

All or some of the functional configuration of the terminal device 3 and the functional configuration of the server 5 described above may be configured by cloud computing. In this case, the transmission and reception unit 31 of the terminal device 3 and the transmission and reception unit 51 of the server 5 can communicate with each other at high speed without using the communication network 100.

The proposal device 7 includes a transmission and reception unit 71, a processing unit 73, a determination unit 75, a generation unit 77, and a storing and reading unit 79. Each of the units described above is a function or a unit for functioning that is implemented by any of the components illustrated in FIG. 2 operating in response to an instruction from the CPU 501 in accordance with a program developed from the HD 504 on the RAM 503. The proposal device 7 further includes a storage unit 7000 implemented by the RAM 503 and the HD 504 illustrated in FIG. 2. The storage unit 7000 serves as storage means.

A description is given below of each functional unit of the proposal device 7.

The transmission and reception unit 71 serves as a reception unit. The transmission and reception unit 71 is implemented by instructions of a CPU and a network I/F, which are similar to the CPU 501 and the network I/F 509 illustrated in FIG. 2, and transmits and receives various data (or information) to and from another apparatus and system through the communication network 100.

The processing unit 73 is implemented by the instructions of the CPU of the proposal device 7, and executes various processes. The processing unit 73 serves as processing means.

The determination unit 75 is implemented by the instructions of the CPU of the proposal device 7, and executes various determination processing. The determination unit 75 serves as determination means.

The generation unit 77 is implemented by the instructions of the CPU of the proposal device 7, and executes a process for generating various types of image data for displaying on a display.

The storing and reading unit 79 serves as a storage control unit. The storing and reading unit 79 is implemented by the instructions of the CPU, an HDD, a medium I/F, a CD-RW drive, which are similar to the CPU 501, the HDD 505, the medium I/F 507, and the CD-RW drive 514 illustrated in FIG. 2, and external PCs or external devices. The storing and reading unit 59 writes and reads various types of data to and from the storage unit 7000, a recording medium , a CD-RW, and the external PCs or the external devices.

The storage unit 7000 includes a service information management DB 7001. The service information management DB 7001 stores model attribute information and service attribute information, as service information. The model attribute information indicates attributes of models managed by the servers 5A, 5B to 5N, respectively. The service attribute information indicates attributes of the servers 5A, 5B to 5N regarding services of the models.

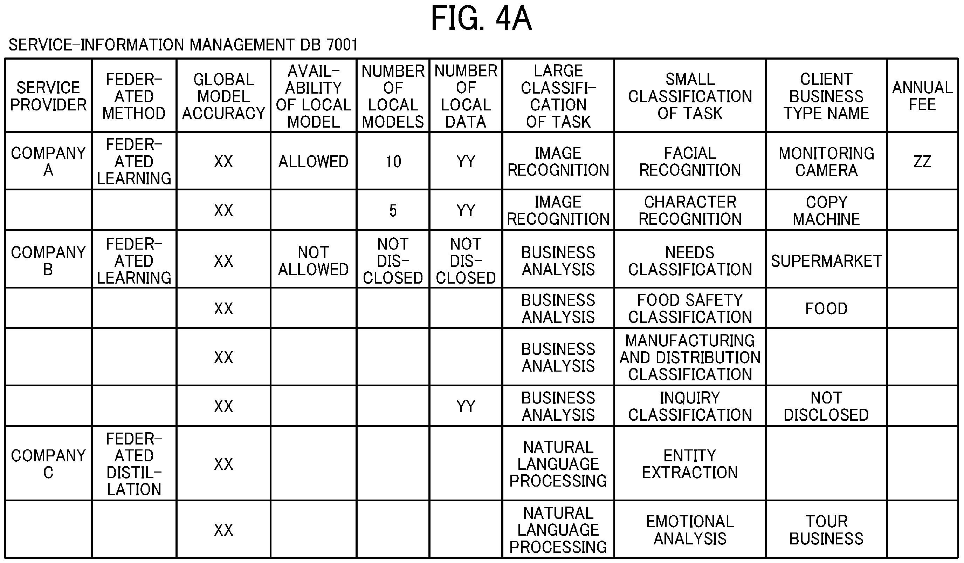

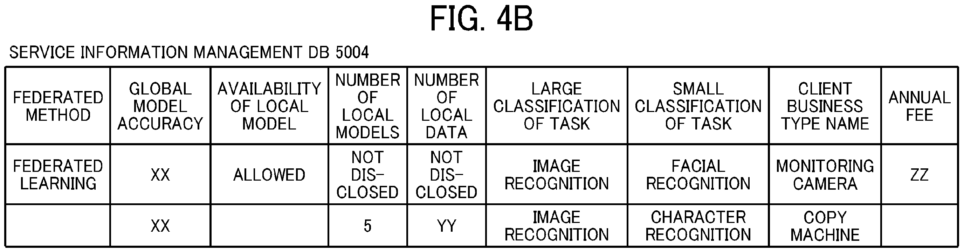

FIGS. 4A and 4B are conceptual diagrams illustrating service information management tables according to an embodiment of the present disclosure. Each of the service information management tables is a table for managing the model attribute information and the service attribute information, as service information. The model attribute information indicates attributes of models managed by the servers 5A, 5B to 5N, respectively. The service attribute information indicates attributes of the servers 5A, 5B to 5N regarding services of the models.

FIG. 4A illustrates a service information management table in the service information management DB 7001 stored in the storage unit 7000 of the proposal device 7.

In the service information management table illustrated in FIG. 4A, the federated method of global model, the global model accuracy, the availability of local model, the number of local models, the number of local data, the large classification of task, the small classification of task, the client business type name, and the annual fee are stored in association with a service provider.

The federated method of global model, the global model accuracy, the number of local data, the large classification of task, the small classification of task, and the client business type name are included in the model attribute information. The annual fee, the availability of local model, and the number of local models are included in the service attribute information.

Service providers A, B, and C indicate companies that provide services using the global model and the local model by using servers 5A, 5B to 5N.

The federated method of the global model indicates, for example, federated learning for updating the global model based on the local model, and federated distillation for updating the global model based on output data obtained by inputting shared data to the local model.

The global model accuracy indicates an evaluation value of the accuracy of the global model calculated based on the evaluation data.

The availability of the local model indicates whether the local model of the terminal device of a specific client used for updating the global model can be used in the terminal device of another client.

The number of local models indicates the number of local models used to update the global model.

The number of local data indicates the number of local learning data used to generate the local model.

The large classification of the task indicates large classifications such as image recognition, business analysis, and natural language processing for tasks executed by the global model and the local model.

The small classification of the task indicates a small classification obtained by subdividing each large classification of the task.

The client business type name indicates the business type of the client of the terminal device that generates the local model.

The annual fee indicates an annual fee for using the service using the global model or the local model, which is provided by the service provider.

FIG. 4B illustrates a service information management table in the service information management DB 5004 stored in the storage unit 5000 of the server 5.

In the service information management table illustrated in FIG. 4B, similarly to the service information management table illustrated in FIG. 4A, the federated method of global model, the global model accuracy, the availability of local model, the number of local models, the number of local data, the large classification of task, the small classification of task, the client business type name, and the annual fee are managed in association with each other.

As described later, various types of information managed by the service information management table illustrated in FIG. 4B are shared and managed by the service information management table illustrated in FIG. 4A.

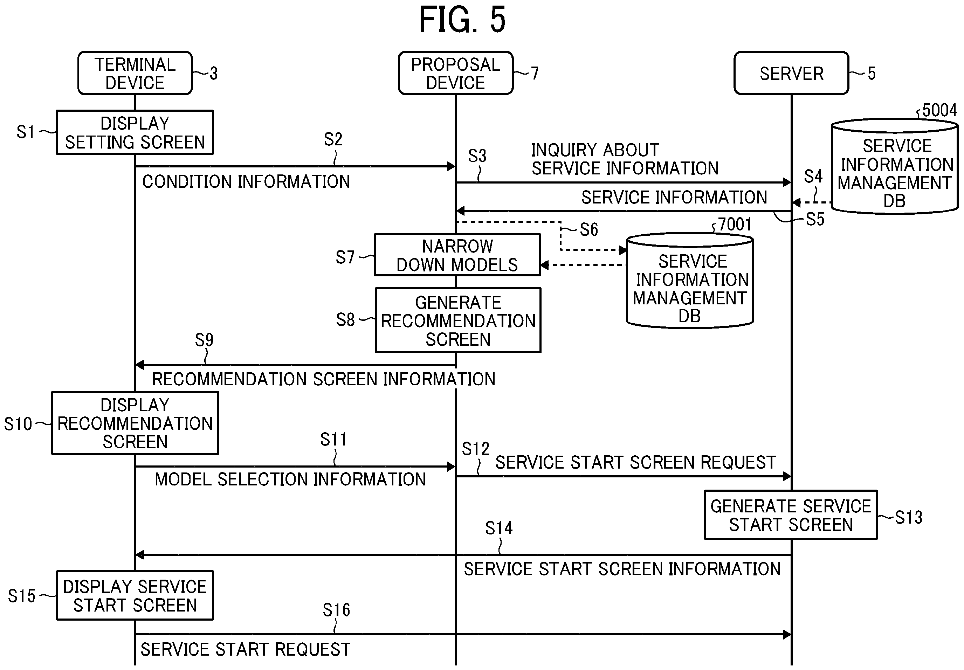

FIG. 5 is a sequence diagram illustrating service proposal processing according to an embodiment of the present disclosure.

When the reception unit 32 of the terminal device 3 receives a predetermined operation, the display control unit 33 causes the display 308 to display a setting screen in step S1, and receives, from a user, a setting operation for setting conditions related to a model on the setting screen.

When the reception unit 32 of the terminal device 3 receives the setting operation, the transmission and reception unit 31 of the terminal device 3 transmits condition information indicating the conditions set by the setting operation to the proposal device 7, and the transmission and reception unit 71 of the proposal device 7 receives the condition information from the terminal device 3 in step S2.

When the transmission and reception unit 71 receives the condition information from the terminal device 3, the transmission and reception unit 71 transmits an inquiry about service information to the servers 5A, 5B to 5N in step S3.

When the transmission and reception unit 51 of each of the servers 5A, 5B to 5N receives the inquiry about the service information from the proposal device 7, the storing and reading unit 59 reads out the service information illustrated in FIG. 4B from the service information management DB 5004 in step S4.

The transmission and reception unit 51 of each of the servers 5A, 5B to 5N transmits the service information read by the storing and reading unit 59 to the proposal device 7, and the transmission and reception unit 71 of the proposal device 7 receives the service information transmitted from each of the servers 5A, 5B to 5N in step S5.

The storing and reading unit 79 stores the service information received by the transmission and reception unit 71 from each of the servers 5A, 5B to 5N into the service information management DB 7001 in association with the service provider in step S6.

The storing and reading unit 79 reads the service information of all of the service providers from the service information management DB 7001, and the determination unit 75 determines whether the multiple models to which the service is provided from the service provider satisfy the conditions indicated by the condition information received in step S2 based on the service information read by the storing and reading unit 79, and narrows down the models satisfying the condition in step S7.

In step S8, the generation unit 77 generates a recommendation screen including model specifying information to specify the model that is determined to satisfy the conditions in step S7. The model specifying information includes service information about the specified model.

The transmission and reception unit 71 of the proposal device 7 transmits the recommendation screen information indicating the recommendation screen generated in step S8 to the terminal device 3, and the transmission and reception unit 31 of the terminal device 3 receives the recommendation screen information transmitted from the proposal device 7 in step S9. Accordingly, the proposal device 7 can suggest a model satisfying the conditions to the terminal device 3.

The display control unit 33 causes the display 308 to display the recommendation screen indicated by the recommendation screen information received by the transmission and reception unit 31 in step S10, and the user performs a selection operation of selecting a desired model from among the models satisfying the conditions on the recommendation screen.

When the reception unit 32 receives the selection operation, the transmission and reception unit 31 transmits model selection information indicating the model selected by the selection operation to the proposal device 7, and the transmission and reception unit 71 of the proposal device 7 receives the model selection information from the terminal device 3 in step S11.

When the transmission and reception unit 71 receives the model selection information from the terminal device 3, the transmission and reception unit 71 transmits a service start screen request including destination information indicating the destination of the terminal device 3 to the server 5 that provides the selected model, and the transmission and reception unit 51 of the server 5 receives the service start screen request transmitted from the proposal device 7 in step S12.

The generation unit 58 generates a service start screen based on the service start screen request in step S13, the transmission and reception unit 51 transmits service start screen information indicating the service start screen to the terminal device 3 indicated by the destination information received in step S12, and the transmission and reception unit 31 of the terminal device 3 receives the service start screen information transmitted from the server 5 in step S14.

The display control unit 33 displays the service start screen indicated by the service start screen information received by the transmission and reception unit 31 on the display 308 in step S15, and the user performs an instruction operation to instruct the start of the service on the service start screen.

When the reception unit 32 receives the instruction operation, the transmission and reception unit 31 transmits a service start request to the server 5, the transmission and reception unit 51 of the server 5 receives the service start request from the terminal device 3, and the server 5 starts the service for the terminal device 3 in step S 16.

In the above description, the functions of the proposal device 7 in FIG. 3 may be performed by the terminal device 3. Alternatively, the terminal device 3 may execute the process of the proposal device 7 in FIG. 5.

In this case, in the terminal device 3 performing the functions of the proposal device 7, the determination unit 35 determines whether the multiple models satisfy the conditions, and the display control unit 33 causes the display 308 to display the model specifying information based on the determination result of the determination unit 35.

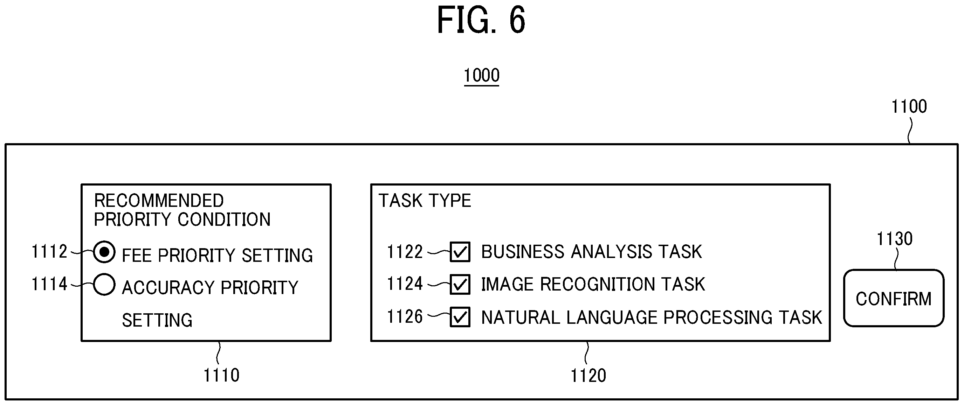

FIG. 6 is a diagram illustrating the setting screen according to an embodiment of the present disclosure.

FIG. 6 is a diagram illustrating a display screen in the terminal device 3 according to the present embodiment, and illustrates a state where the display control unit 33 displays the setting screen on the display 308 in step S1 of FIG. 5.

The display control unit 33 displays a setting screen 1100 on a display screen 1000. The setting screen 1100 includes a priority condition setting screen 1110 for setting the priority of the attribute of the model, a task setting screen 1120 for setting the task to be executed by the model, and a confirmation button 1130.

The display control unit 33 displays a fee priority setting button 1112 and an accuracy priority setting button 1114 which are selectively configurable on the priority condition setting screen 1110. The display control unit 33 displays a business analysis task setting box 1122, an image recognition task setting box 1124, and a natural language processing task setting box 1126 which can be configurable independently on the task setting screen 1120.

The fee priority setting button 1112 is a button for setting a high priority of the fee for using the model. The accuracy priority setting button 1114 is a button for setting a high priority of the evaluation of the model.

The business analysis task setting box 1122, the image recognition task setting box 1124, and the natural language processing task setting box 1126 are boxes for setting business analysis, image recognition, and natural language processing, respectively, as tasks to be executed by the model.

In the state of FIG. 6, the user operates and selects either the fee priority setting button 1112 or the accuracy priority setting button 1114 based on the intention of which of the evaluation of the model or the fee is prioritized.

The user selects the business analysis task setting box 1122, the image recognition task setting box 1124, and the natural language processing task setting box 1126 based on the task to be executed.

When the user operates the various setting buttons and setting boxes and operates the confirmation button 1130, the reception unit 32 receives the operation as a setting operation for setting the conditions related to the model, and as described in step S2 of FIG. 5, the transmission and reception unit 31 transmits the condition information indicating the conditions set by the setting operation to the proposal device 7.

As an example, when the user selects the fee priority setting button 1112 and the image recognition task setting box 1124 in the state of FIG. 6, the determination unit 75 of the proposal device 7 narrows down the multiple models for which the service provider provides a service to models that satisfy conditions in step S7 of FIG. 5. In this example, the conditions are whether the large classification of task is image recognition and whether the annual fee is equal to or less than a predetermined value.

Then, in step S7 of FIG. 5, the generation unit 77 generates the recommendation screen in which the model specifying information of the models of which the large classification of task is the image recognition and the annual fee is equal to or less than the predetermined value. The model specifying information of the models are arranged in ascending order of the annual fee.

As described above, the user can easily set the priority of the attribute of the model and the task to be executed by the model to set the conditions of the model even when the user does not have any technical knowledge about the model.

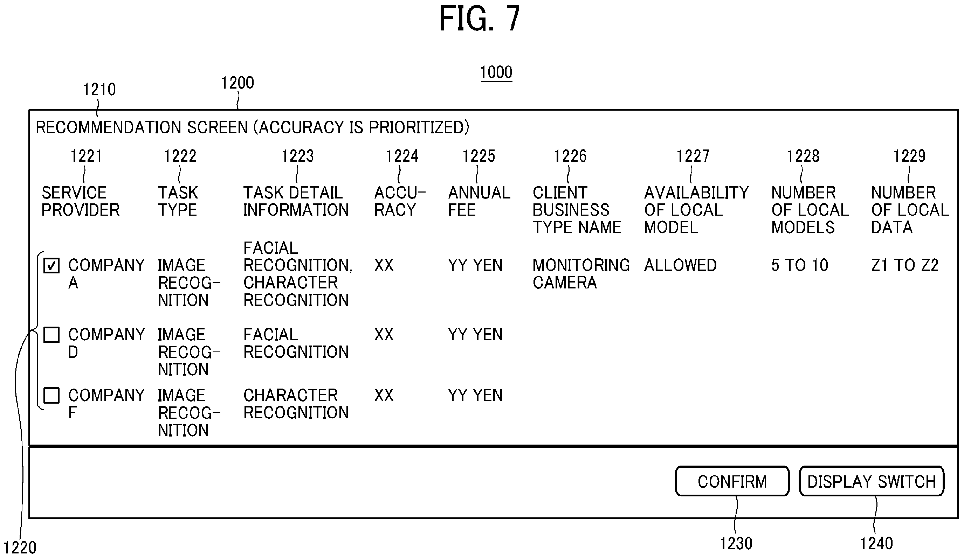

FIG. 7 is a diagram illustrating the recommendation screen according to an embodiment of the present disclosure.

FIG. 7 is a diagram illustrating a display screen in the terminal device 3 according to the present embodiment and illustrating a state where the display control unit 33 displays the recommendation screen on the display 308 in step S10 of FIG. 5.

The display control unit 33 displays a recommendation screen 1200 for displaying the model specifying information, a confirmation button 1230, and a display switching button 1240 on the display screen 1000.

The display control unit 33 displays a priority information 1210 and service provider information 1221 on the recommendation screen 1200. The display control unit 33 further displays model selection boxes 1220, task type information 1222, task detail information 1223, global model accuracy information 1224, annual fee information 1225, client business type name information 1226, local model availability information 1227, number-of-local-models information 1228, and number-of-local-data information 1229 in association with the service provider information 1221 on the recommendation screen 1200.

Various types of information 1221 to 1229 displayed on the recommendation screen 1200 correspond to the service information managed in the service information management DB 7001 of the proposal device 7 illustrated in FIG. 4A.

The generation unit 77 generates the recommendation screen 1200 in FIG. 7 when the accuracy priority setting button 1114 and the image recognition task setting box 1124 are operated in FIG. 6. In the recommendation screen 1200, model specifying information is displayed in order of the accuracy of global model. The model specifying information is the model specifying information of the models whose large classification of the task is image recognition and whose accuracy of the global model is equal to or higher than the predetermined value in step S7 of FIG. 5.

In this case, "accuracy is prioritized" is displayed in the priority information 1210, and the model specifying information corresponding to the task type information 1222 of "image recognition" is displayed.

When the user operates the display switching button 1240, the reception unit 32 receives a display switching operation, and the display control unit 33 displays the remaining model specifying information on the recommendation screen 1200.

In the state of FIG. 7, the user confirms the attribute of the model and the service attribute information in the various types of information 1221 to 1229, and then operates any of the model selection boxes 1220 to select the desired model.

When the user operates the confirmation button 1230 after operating any of the model selection boxes 1220, the reception unit 32 receives the operation as a selection operation for selecting the desired model, and as described in step S11 of FIG. 5, the transmission and reception unit 31 transmits the model selection information indicating the model selected by the selection operation to the proposal device 7.

As an example, in the state of FIG. 7, when the user operates the model selection box 1220 in which the service provider information 1221 indicates a company A, in step S12 of FIG. 5, the transmission and reception unit 71 of the proposal device 7 transmits the service start screen request including destination information indicating the destination of the terminal device 3 to the server 5A of the company A.

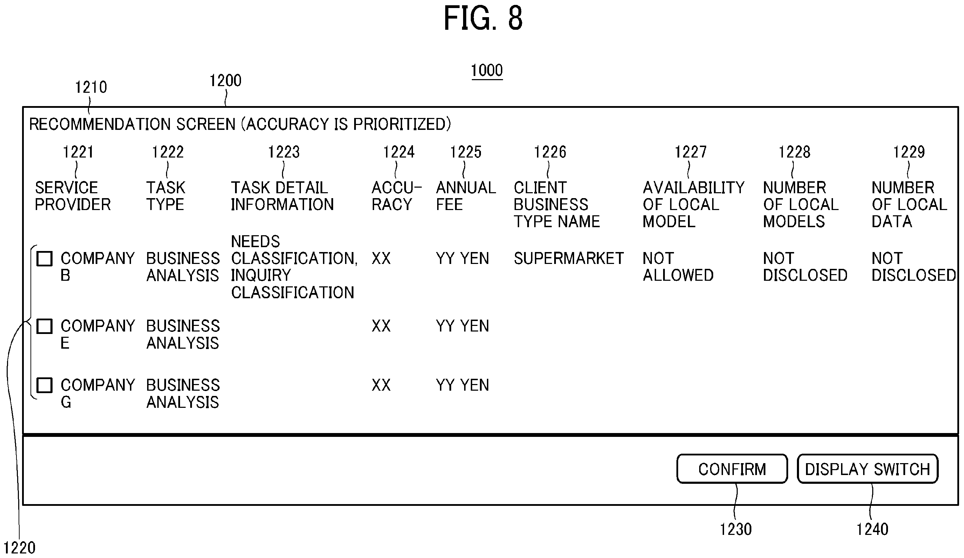

FIG. 8 is a diagram illustrating another recommendation screen according to an embodiment of the present disclosure.

Similarly to FIG. 7, FIG. 8 is a diagram illustrating a state where the display control unit 33 displays the recommendation screen on the display 308 in step S10 of FIG. 5.

The generation unit 77 generates the recommendation screen 1200 in FIG. 8 when the fee priority setting button 1112 and the business analysis task setting box 1122 are operated in FIG. 6. In the recommendation screen 1200, model specifying information is displayed in ascending order of the annual fee. The model specifying information is the model specifying information of the models whose large classification of the task is business analysis and whose the annual fee is equal to or lower than the predetermined value in step S7 of FIG. 5.

In this case, "fee is prioritized" is displayed in the priority information 1210, and the model specifying information corresponding to the task type information 1222 of "business analysis" is displayed. The rest of FIG. 8 is the same as FIG. 7.

As described above, the user can efficiently select a desired model from multiple models for executing desired tasks arranged in the order of desired priorities based on the displayed attribute of the model and the service attribute information.

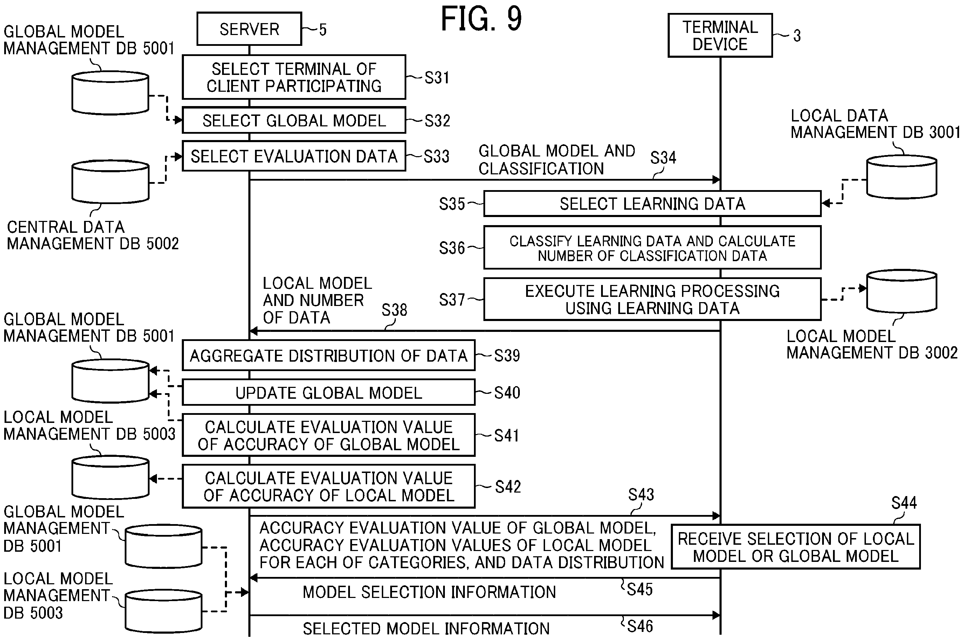

FIG. 9 is a sequence diagram illustrating model processing according to an embodiment of the present disclosure.

In step S31, the selection unit 54 of the server 5 selects the terminal device 3 of the client participating in the federated learning based on the task executed by the model. In step S32, the selection unit 54 of the server 5 selects a global model to be distributed to each terminal device 3 based on the task to be executed from the global models read from the global model management DB 5001 by the storing and reading unit 59. The selection unit 54 selects the same global model for all the terminal devices 3 participating in the federated learning.

The selection unit 54 may select a global model that is used previously. Alternatively, the selection unit 54 may select a global model based on a local model learned by a specific terminal device 3. Alternatively, the selection unit 54 may select a global model learned in advance by a general-purpose data set.

In step S33, the selection unit 54 selects evaluation data from the central data read from the central data management DB 5002 by the storing and reading unit 59, based on the task executed by the model. The evaluation data is used for evaluating the accuracy of the global model and the local model.

The selection unit 54 may select all of the central data acquired in step S33 as the evaluation data or randomly select the evaluation data. However, it is preferable to select the evaluation data by a stratified sampling. The stratified sampling is a method of selecting evaluation data so as to include the same data distribution as that of the data to be included.

In step S34, the transmission and reception unit 51 transmits the global model and the classification items selected in step S32 to each terminal device 3, and the transmission and reception unit 31 of each terminal device 3 receives the global model and the classification items transmitted from the server 5. The classification items are items for classifying learning data. The classification item may be items set by the user in advance or items labeled by the user after clustering the learning data.

In step S35, the selection unit 34 selects learning data to be used for the learning processing based on the task executed by the model from the local data read from the local data management DB 3001 by the storing and reading unit 39. In step S36, the processing unit 37 calculates the number of learning data selected in step S35, classifies the learning data based on the classification items, and calculates the number of data for each classification item.

In step S37, the learning processing unit 38 executes the learning processing on the global model received in step S34 using the learning data selected in step S35. When the learning processing is finished, the storing and reading unit 59 generates the global model on which the learning processing is executed using the learning data as the local model and stores the global model in the local model management DB 3002 for each task to be executed.

The learning processing unit 38 executes the learning processing on the global model received in step S34 for each learning data classified in step S36. When the learning processing is finished, the storing and reading unit 59 generates the global model obtained by executing the learning processing for each classified learning data as the local model for each classification and stores the local model in the local model management DB 3002.

The learning processing unit 38 may use the number of epochs or an early stopping as a learning end condition.

The number of epochs is the number of times one learning data is repeatedly learned. The early stopping is a method of stopping learning when learning progresses and no further improvement in accuracy can be expected, and is a method of dividing data into "data for learning" and "data for validation for determining whether to stop learning" at the time of learning and determining whether to stop learning using the data.

In step S38, the transmission and reception unit 31 transmits the number of learning data and the number of learning data for each classification calculated in step S36 and the local model and the local model for each classification obtained in step S37 to the server 5. The transmission and reception unit 51 of the server 5 receives the number of learning data and the number of learning data for each classification, and the local model and the local model for each classification transmitted from each terminal device 3.

In step S39, the processing unit 57 aggregates the distribution of the data received in step S38 for each classification in each terminal device 3.

In step S40, the updating unit 52 updates the global model selected in step S32 based on the number of learning data and the local model in each terminal device 3 received in step S38.

The updating unit 52 can use the known technique such as federated averaging (FedAvg [1]), federated proximal (FedProx [2]), or federated averaging with momentum (FedAvgM [3]) to update the global model. However, the technique is not limited to the above as long as the global model can be updated based on the local model.
[1] H. Brendan McMahan, Eider Moore, Daniel Ramage, Seth Hampson, and Blaise Aguera y Areas. Communication-efficient learning of deep networks from decentralized data. Proceedings of the 20th International Conference on Artificial Intelligence and Statistics (AISTATS), Vol. 54, 2017.
[2] Tian Li, Anit Kumar Sahu, Manzil Zaheer, Maziar Sanjabi, Ameet Talwalkar, and Virginia Smith. Federated optimization in heterogeneous networks. In proceedings of Machine Learning and Systems, Vol. 2, pp. 429-450, 2020.
[3] Hsu, T. M. H., Qi, H., Brown, M.: Measuring the effects of non-identical data distribution for federated visual classification. arXiv preprint arXiv: 1909.06335 (2019).

For example, in FedAvg [1], the updating unit 52 calculates a weighted average of the weights of the local models for each terminal device 3 by the number of data in each terminal device 3 to update the global model.

The determination unit 55 may determine whether an update termination condition is satisfied. When the update termination condition is not satisfied, the process may return to step S34.

The determination unit 55 may determine whether the number of updates of the global model has reached a predetermined number of times as the update termination condition. Alternatively, the determination unit 55 may determine that the update progresses and no further improvement in accuracy can be expected.

Alternatively, validation data for determining whether to stop the update may be prepared at the time of the update, and the determination unit 55 may determine whether to stop the update based on the data.

As described above, the terminal device 3 transmits the local model and the number of data to the server 5. However, since the terminal device 3 does not transmit the local data, the server 5 can update the global model based on the local model and the number of data while the local data remains distributed.

In step S41, the evaluation unit 56 calculates an evaluation value of the accuracy of the global model updated in step S40 based on the evaluation data selected in step S33. The storing and reading unit 59 stores the evaluation value in the global model management DB 5001 in association with the updated global model for each task executed by the model.

In step S42, the evaluation unit 56 calculates evaluation values of the accuracy of the local model received in step S38 and the local model for each classification for each terminal device 3 based on the evaluation data selected in step S33. The storing and reading unit 59 stores each of the evaluation values into the local model management DB 5003 in association with the local model and the local model for each classification for each task executed by the model for each terminal device 3.

Examples of the evaluation values of the accuracy of the global model and the local model include an accuracy, a precision, a recall, a F1-score, and a loss. However, the evaluation values are not limited to these values, and any value may be used as long as a value can evaluate the performances of the machine learning models.

In step S43, the transmission and reception unit 51 transmits the evaluation value of the accuracy of the global model calculated in step S41, the evaluation values of the accuracy of the local models for each of the terminal devices 3 and the local models for each of the classifications calculated in step S42, and the distribution of the data for each of the classifications for each of the terminal devices 3 aggregated in step S39 to each of the terminals 3 for each task executed by the model. The transmission and reception unit 31 of each of the terminal devices 3 receives the various evaluation values and distribution of the data transmitted from the server 5.

In step S44, the display control unit 33 displays the various evaluation values and the distribution of the data received in step S43 on the display 308, and the reception unit 32 receives selection of the local model or the global model.

In step S45, the transmission and reception unit 31 transmits the model selection information indicating the selected local model or global model to the server 5, and the transmission and reception unit 51 of the server 5 receives the model selection information transmitted from the terminal device 3.

In step S46, the storing and reading unit 59 reads the global model or the local model indicated by the model selection information received in step S45 from the global model management DB 5001 or the local model management DB 5003, and the transmission and reception unit 51 transmits the global model or the local model read by the storing and reading unit 59 to the terminal device 3. Then, the transmission and reception unit 31 of the terminal device 3 receives the global model or the local model transmitted by the server 5.

The terminal device 3 transmits the model selection information to the server 5 in step S45, and the server 5 transmits the selected model to the terminal device 3 in step S46. However, when the selected model is a local model of another terminal device 3, the terminal device 3 may transmit the model selection information to the other terminal device 3, and the other terminal device 3 may transmit the selected model to the terminal device 3.

Alternatively, when the selected model is a local model of another terminal device 3, the terminal device 3 may transmit the model selection information to the server 5, the server 5 may transfer the model selection information to the other terminal device 3, and the other terminal device 3 may transmit the selected model to the terminal device 3.

In a case where the terminal device 3 does not execute the learning processing, the server 5 or another terminal device 3 may transmit the selected model to a device designated by the terminal device 3.

The terminal device 3 executes the same process as in steps S35 to S37 based on the global model or the local model received in step S46.

In the sequence diagram of FIG. 9 described above, the accuracy of the global model and the local model is evaluated based on the central data. However, as another configuration, the accuracy of the global model and the local model may be evaluated based on the local data of each client.

In this case, the terminal device 3 executes the following process. The selection unit 34 selects evaluation data to be used for evaluating the accuracy of the global model and the local model from the local data read from the local data management DB 3001 by the storing and reading unit 59.

The evaluation unit 36 calculates the evaluation values of the accuracy of the global model and the local model based on the selected evaluation data. The transmission and reception unit 31 transmits the calculated evaluation values to the server 5.

Then, the server 5 executes the following process. The transmission and reception unit 51 receives the evaluation values transmitted from each terminal device 3. The evaluation unit 56 calculates the evaluation values of all of the terminal devices 3 participating in the federated learning by using the average value of the evaluation values of the terminal devices 3 and the value obtained by performing weighted averaging according to the number of data.

The evaluation unit 56 may calculate the average of the evaluation value of each client acquired in the past and the evaluation value of each client acquired this time. The evaluation value is not limited to the above, and any value may be used as long as the value can evaluate the performances of the machine learning models based on the evaluation values of each terminal device 3.

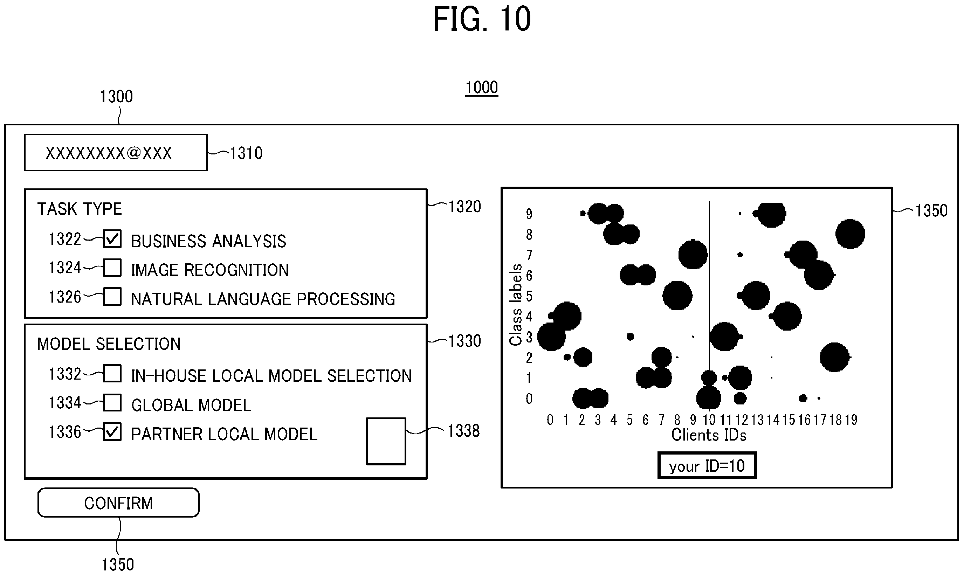

FIG. 10 is a diagram illustrating a selection screen according to an embodiment of the present disclosure.

FIG. 10 is a diagram illustrating a display screen of the terminal device 3 according to the present embodiment, and a state where the display control unit 33 displays a selection screen on the display 308 in step S44 of FIG. 9.

The display control unit 33 displays a selection screen 1300 including a user information display screen 1310, a task selection screen 1320, a model selection screen 1330, a confirmation button 1340, and a data classification screen 1350 on the display screen 1000.

The display control unit 33 displays a business analysis task setting box 1322, an image recognition task setting box 1324, and a natural language processing task setting box 1326 on the task selection screen 1320. The display control unit 33 displays an in-house local model setting box 1332, a global model setting box 1334, a partner local model setting box 1336, and a partner local model specifying box 1338 on the model selection screen 1330.

The data classification screen 1350 is a screen for displaying classification items obtained by classifying the own learning data and another data that are used for generating the own local model and another local models, and details thereof are described later.

The partner local model specifying box 1338 is a screen for inputting local model specifying information for specifying a desired model among multiple local models when the partner local model setting box 1336 is selected.

In the state of FIG. 10, the user operates and selects any one of the business analysis task setting box 1322, the image recognition task setting box 1324, and the natural language processing task setting box 1326 based on the task to be executed.

Then, the user determines a model suitable for the task to be executed while confirming the data classification screen 1350, and operates one of the in-house local model setting box 1332, the global model setting box 1334, and the partner local model setting box 1336 to select the box.

When the user operates the confirmation button 1340 after operating the various selection boxes described above, the reception unit 32 receives the operation as a selection operation of selecting a desired model from the global model and the multiple local models, and then as described in step S45 of FIG. 9, the transmission and reception unit 31 transmits the model selection information indicating the selected local model or global model including the task selection information indicating the selected task to the server 5.

As an example, when the user operates the business analysis task setting box 1322 and the partner local model setting box 1336, inputs one as the local model specifying information to the partner local model specifying box 1338, and operates the confirmation button 1340, then the transmission and reception unit 31 transmits the model selection information indicating one of the local model specifying information including the task selection information indicating the business analysis task to the server 5.

On the other hand, when the user operates the in-house local model setting box 1332 alone and operates the confirmation button 1340, since the in-house local model is stored in the local data management DB 3001, the transmission and reception unit 31 does not transmit the model selection information to the server 5.

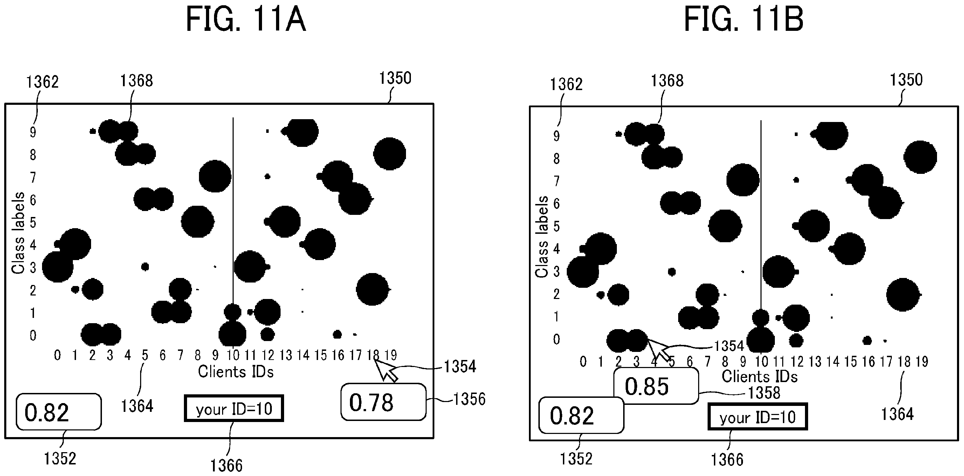

FIGS. 11A and 11B are diagrams of a data classification screen 1350 according to an embodiment of the present disclosure.

As illustrated in FIG. 11A, the display control unit 33 displays a distribution 1368 of the learning data associated with a classification item 1362 and the local model identification information 1364 on the data classification screen 1350 illustrated in FIG. 10. The display control unit 33 displays the classification items 1362, into which the learning data is classified, on the vertical axis and the local model identification information 1364 on the horizontal axis.

The classification items 1362 are displayed from 0 to 9 in FIG. 11A. However, the classification items 1362 may be displayed by characters, or may be grouped for each of multiple classification items as follows to display. Classification items 0 to 5 are common classification items of each company. Classification items 6 and 7 are unique classification items of a group of the company A. Classification items 8 and 9 are unique classification items of a group of the company B.

As the classification items 1362, classification items having learning data for each client ID of the local model identification information 1364 may be displayed as follows instead of displaying all classification items 0 to 9. For example, when the client ID of the local model identification information 1364 is 0, classification items 3 and 4 of the classification items 1362 are displayed. Alternatively, when the client ID of the local model identification information 1364 is 19, classification items 2 and 8 of the classification item 1362 are displayed.

The local model identification information 1364 is also displayed by the numbers of 0 to 19 in FIG. 11A. However, similarly to the classification item 1362 described above, the local model identification information 1364 may be displayed by characters or may be displayed for each group of multiple local models.

The display control unit 33 displays black circles as the distribution 1368 of the learning data. The black circle indicates the number of learning data of the specific classification item used for generating the specific local model associated with the local model identification information 1364 and the classification item 1362. The black circle is displayed in a size corresponding to the number of learning data.

The display control unit 33 displays global model evaluation information 1352, local model evaluation information 1356, and in-house local model identification information 1366 on the data classification screen 1350. The global model evaluation information 1352 indicates the evaluation value of the global model. The local model evaluation information 1356 indicates the evaluation value of the local model. The in-house local model identification information 1366 identifies the in-house local model.

The display control unit 33 further displays the local model evaluation information 1356 indicating the evaluation value of the local model indicated by the local model identification information 1364 pointed by a pointer 1354 on the data classification screen 1350.

In FIG. 11B, the display control unit 33 displays the local model evaluation information 1358 for each classification for the specific black circle pointed by the pointer 1354 on the data classification screen 1350.

The local model evaluation information 1358 for each classification indicates the evaluation value of the local model for each specific classification generated using learning data indicated by a specific black circle.

In the state of FIGS. 11A and 11B, the user whose in-house local model identification information is indicated by 10 can confirm the global model evaluation information 1352 and the local model evaluation information 1356 to determine which model has a high evaluation.

However, even the model with the high evaluation may not satisfy a desired accuracy when in-house data is used.

For example, since most of the learning data for the model whose local model identification information is 9 are classified into the classification item 7, the accuracy is unlikely to be as accurate as the evaluated value when the in-house data whose classification item is 0 is used.

On the other hand, since the model whose local model identification information is 2 has a high proportion of training data with classification item 0, the accuracy is likely to be as accurate as the evaluated value when the in-house data whose classification item is 0 is used.

As described above, the user can appropriately select another local model after comparing and confirming the classification item 1362 and the distribution 1368 of another learning data with the classification item 1362 and the distribution 1368 of the user's in-house learning data.

In another case, the user whose the in-house local model identification information is indicated by 10 has a high proportion of the training data with the classification item 0. However, in a case where the user has a plan to use the training data with the classification item 7, the model whose local model identification information is 9 having the training data with the classification item 7 can be determined as a candidate.

In this case, the user can appropriately select another local model after comparing and confirming the classification item 1362 and the distribution 1368 of another learning data with the classification item 1362 of learning data to be newly used in the future.

When the user uses the training data with the classification item 7, the user can confirm the local model evaluation information 1358 for each training data with the classification item 7 to determine which of the models whose local model identification information is 9 or 16 has a higher accuracy.

In other words, the user can confirm not only the local model evaluation information 1356 but also the local model evaluation information 1358 for each classification to determine a model with high accuracy when data of a desired classification item is used.

A description is given below of some aspects of the present disclosure.

### Aspect 1

As described above, a terminal device 3 according to an embodiment of the present disclosure includes a display control unit 33, a reception unit 32, and a transmission and reception unit 31. The display control unit 33 causes a display 308 to display (in other words, the display control unit 33 is configured to display) local model identification information 1364 identifying a local model generated by another terminal device and a classification item 1362 that classifies learning data used to generate the local model generated by the other terminal device. The reception unit 32 receives selection of the local model generated by the other terminal device. The transmission and reception unit 31 transmits selection information indicating the selection of the local model generated by the other terminal device to the server 5. The terminal device 3 servers as a node, and the server 5 serves as another device, or simply a device. However, the other device may be another terminal device.

Accordingly, the user can appropriately select another local model in addition to the user's own local model after confirming the classification item 1362 that classifies another learning data used to generate another local model.

### Aspect 2

In the terminal device 3 according to Aspect 1, the display control unit 33 causes the display 308 to display multiple pieces of the local model identification information 1364 and the classification items 1362. The multiple pieces of the local model identification information 1364 indicate other local models generated by other terminal devices, respectively. The classification items 1362 are classification items indicating classifications of other learning data used for generation of other local models, respectively.

Accordingly, the user can appropriately select a desired local model from among the other local models after confirming the classification items 1362 that indicate the classifications of the other learning data used for the generation of the other local models, respectively.

### Aspect 3

In the terminal device 3 according to Aspect 1 or 2, the display control unit 33 causes the display 308 to display own classification item (the own classification item 1362) classifying own learning data used for executing the learning processing for generating the own local model.

Accordingly, the user can appropriately select another local model after comparing and confirming the classification item 1362 that classifies other learning data used to generate another local model and the own classification item 1362 classifying the own learning data used for executing the learning processing for generating the own local model.

### Aspect 4

In the terminal device 3 according to any one of Aspects 1 to 3, the display control unit 33 further causes the display 308 to display a distribution 1368 of other learning data associated with the classification item 1362.

Accordingly, the user can more appropriately select another local model after confirming the distribution 1368 of other learning data in association with the classification item 1362 that classifies the other learning data used to generate the other local model.

### Aspect 5

In the terminal device 3 according to any one of Aspects 1 to 4, the display control unit 33 causes the display 308 to display the local model evaluation information 1356 indicating the evaluation of another local model.

Accordingly, the user can appropriately select another local model after confirming the classification item 1362 that classifies other learning data used to generate the other local model and the local model evaluation information 1356 indicating the evaluation of the other local model.

### Aspect 6

In the terminal device 3 according to Aspect 5, the display control unit 33 causes the display 308 to display local model evaluation information 1358 for each classification item 1362.

Accordingly, the user can appropriately select another local model after confirming the local model evaluation information 1358 for each of the classification items 1362 that classify other learning data used to generate the other local model.

### Aspect 7

The terminal device 3 according to any one of Aspects 1 to 6 includes the transmission and reception unit 31 that receives information indicating another local model from the server 5. The server 5 is an example of another device. However, another device may be another terminal device.

Accordingly, the terminal device 3 can acquire another local model selected after confirming the classification item 1362.

As another embodiment, a device designated by the terminal device 3 may receive information indicating another local model from another device.

### Aspect 8

The terminal device 3 according to Aspect 7 includes a learning processing unit 38 that executes the learning processing using the own learning data on another local model to generate the own local model.

Accordingly, the terminal device 3 can execute the learning processing using the own learning data on another local model selected to generate its own local model after confirming the classification item 1362.

As another embodiment, a device designated by the terminal device 3 may execute the learning processing using the own learning data on another local model to generate the own local model.

### Aspect 9

In the terminal device 3 according to any one of Aspects 1 to 8, the reception unit 32 receives selection of a global model updated based on multiple local models generated by the multiple terminal devices 3, and the transmission and reception unit 31 transmits selection information indicating that the global model has been selected to the server 5.

Accordingly, the user can select the global model after confirming the classification item 1362 that classifies other learning data used to generate another local model.

### Aspect 10

An information processing method executed by the terminal device 3 according to an embodiment of the present disclosure includes: displaying local model identification information 1364 identifying a local model generated by another terminal device and a classification item 1362 that classifies learning data used to generate the local model generated by the other terminal device on a display 308; receiving selection of the other local model generated by the other terminal device ; and transmitting selection information indicating the selection of the other local model generated by the other terminal device to another device.

### Aspect 11

A program according to an embodiment of the present disclosure causes a computer to execute the information processing method according to Aspect 10.

### Aspect 12

An information processing system 1 according to an embodiment of the present disclosure includes a terminal device 3 and another device that can communicate with the terminal device 3. The terminal device 3 of the information processing system 1 includes a display control unit 33, a reception unit 32, and a transmission and reception unit 31. The display control unit 33 causes a display 308 to display local model identification information 1364 identifying a local model generated by another terminal device and a classification item 1362 that classifies learning data used to generate the local model generated by the other terminal device. The reception unit 32 receives selection of the local model generated by the other terminal device. The transmission and reception unit 31 transmits selection information indicating the selection of the local model generated by the other terminal device to the other device. The other device includes a transmission and reception unit that receives the selection information transmitted by the terminal device 3.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A node (3) comprising:
a display control unit (33) configured to display on a display unit (308), local model identification information (1364) identifying another local model generated by another node (3) and a classification item (1362) that classifies learning data used to generate said another local model;
a reception unit (32) configured to receive selection of said another local model; and
a transmission unit (31) configured to transmit selection information indicating the selection of said another local model to another device (3, 5).

2. The node (3) according to claim 1,
wherein the display control unit (33) is configured to further display on the display unit (308), a plurality of local model identification information (1364) indicating a plurality of local models generated by a plurality of nodes, respectively, and a plurality of classification items (1362) indicating classifications of learning data used for generating the plurality of local models, respectively.

3. The node (3) according to claim 1 or 2,
wherein the display control unit (33) is configured to display on the display unit (308), own classification item (1362) classifying own learning data used for executing learning processing for generating own local model.

4. The node (3) according to any one of claims 1 to 3,
wherein the display control unit (33) is configured to further display on the display unit (308), a distribution (1368) of the learning data associated with the classification item (1362).

5. The node (3) according to any one of claims 1 to 4,
wherein the display control unit (33) is configured to display on the display unit (308), local model evaluation information (1356) indicating an evaluation of said another local model.

6. The node (3) according to claim 5,
wherein the display control unit (33) is configured to display on the display unit (308), local model evaluation information (1358) for each classification item (1362).

7. The node (3) according to any one of claims 1 to 6, further comprising a receiving unit (31) configured to receive information indicating said another local model from said another device (5).

8. The node (3) according to claim 7, further comprising a learning processing unit (38) configured to execute learning processing using the own learning data on said another local model to generate the own local model.

9. The node (3) according to claim 1,
wherein the reception unit (32) is further configured to receive selection of a global model updated based on a plurality of local models generated by a plurality of nodes (3) including the node (3) and said another node (3), and
wherein the transmission unit (31) is further configured to transmit selection information indicating that the global model has been selected to said another device (5).

10. An information processing system comprising:
the node (3) of any one of claims 1 to 9; and
said another device (3, 5) configured to communicate with the node (3).

11. An information processing method executed by a node (3), the method comprising:
displaying on a display unit (308), local model identification information (1364) identifying another local model generated by another node (3) and a classification item (1362) that classifies learning data used to generate said another local model;
receiving selection of said another local model; and
transmitting selection information indicating the selection of said another local model to another device (3, 5).

12. A carrier medium carrying computer-readable program code that causes a computer system to perform the information processing method of claim 11.
